# EUROPEAN PATENT SPECIFICATION

(11) **EP 2 422 092 B1**
(45) Date of publication and mention of the grant of the patent: **10.10.2018**
(21) Application number: 10702228.7
(22) Date of filing: 12.03.2010
(51) Int. Cl.: H04L 29/12, H04L 9/32, H04L 29/06

(54) **GENERATING A DNS QUERY TO IMPROVE RESISTANCE AGAINST A DNS ATTACK**
ERZEUGUNG EINER DNS-ABFRAGE ZUR VERBESSERUNG DES WIDERSTANDS GEGEN EINEN DNS-ANGRIFF
ÉMISSION D'UNE REQUÊTE DNS POUR AMÉLIORER LA RÉSISTANCE À UNE ATTAQUE DNS

(30) Priority: 20.04.2009 US 426330
(43) Date of publication of application: 29.02.2012
(73) Proprietor: Citrix Systems, Inc., Fort Lauderdale, FL 33309 (US)
(72) Inventor: SHELEST, Art, Fort Lauderdale, FL 33309 (US)
(74) Representative: Murgitroyd & Company
(86) International application number: PCT/US2010/027132
(87) International publication number: WO 2010/123632

(56) References cited:
- US-B2- 7 734 745
- HUBERT NETHERLABS COMPUTER CONSULTING BV R VAN MOOK EQUINIX A: "Measures for Making DNS More Resilient against Forged Answers; rfc5452.txt", MEASURES FOR MAKING DNS MORE RESILIENT AGAINST FORGED ANSWERS; RFC5452.TXT, INTERNET ENGINEERING TASK FORCE, IETF; STANDARD, INTERNET SOCIETY (ISOC) 4, RUE DES FALAISES CH- 1205 GENEVA, SWITZERLAND, 1 January 2009 (2009-01-01), XP015065470, [retrieved on 2009-01-27]
- VIXIE P ET AL: "Use of Bit 0x20 in DNS Labels to Improve Transaction Identity; draft-vixie-dnsext-dns0x20-00.txt", USE OF BIT 0X20 IN DNS LABELS TO IMPROVE TRANSACTION IDENTITY; DRAFT-VIXIE-DNSEXT-DNS0X20-00.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, 17 March 2008 (2008-03-17), XP015060071,
- MENEZES A J ET AL: "Handbook of Appied Cryptography , CHAPTER 5 - PSEUDORANDOM BITS AND SEQUENCES", 1 January 1997 (1997-01-01), HANDBOOK OF APPLIED CRYPTOGRAPHY; [CRC PRESS SERIES ON DISCRETE MATHEMATICES AND ITS APPLICATIONS], CRC PRESS SERIES ON DISCRETE MATHEMATICS AND ITS APPLICATIONS, BOCA RATON, FL, US, PAGE(S) 169 - 190, XP002403364, ISBN: 978-0-8493-8523-0 chapter 5.3

## Description

### Related Application

This application claims the benefit of and priority to U.S. Non-provisional Application No. 12/426,330, entitled "Systems and Methods For Generating A DNS Query To Improve Resistance Against A DNS Attack", filed on April 20, 2009.

### Field of the Invention

The present application generally relates to data communication networks. In particular, the present application relates to systems and methods for generating a Domain Name System ["DNS"] query to improve resistance against a DNS attack.

### Background of the Invention

The Domain Name System ["DNS"] allows human meaningful names to be associated with the numerical internet protocol ["IP"] addresses of clients, servers, or other resources on the internet. For example, the domain name *www.example.com* may be associated with *208.77.188.166.* Domain names are mapped and indexed by name servers. Each name server is authoritative or responsible for indexing clients, servers, or other resources within its zone of authority. When a user requests a resource by domain name, a DNS resolver identifies the request. If the IP address for the requested resource is not available in its cache, the resolver initiates a query to a name server. The DNS resolver's query includes a transaction identifier. The name server's reply may also include the transaction identifier to identify the response as having come from the name server queried by the DNS resolver. If a malicious attacker can respond to a DNS resolver's request before the real name server can, the malicious attacker can direct the user to a different client, server, or resource than was intended. This opens possibilities of identity or data theft or other malicious activities.

IETF Request for Comment 5452, "Measures for Making DNS More Resilient against Forged Answers", by A. Hubert and R. van Mook, published January 2009, sets out how to make the DNS more resilient against accepting incorrect responses.

US 2004/0083306 discloses a node transmitting a request to update the master's database using a BIND 8 (or subsequent) protocol. Such a request may be encrypted for security and may include a self-generated identity key for further security.

### Brief Summary of the Invention

The present solution provides systems and methods for generating DNS queries that are more resistant to being compromised by attackers. To generate the transaction identifier, the DNS resolver uses a cryptographic hash function. The inputs to the hash function may include a predetermined random number, the destination IP address of the name server to be queried, and the domain name to be queried. Because of the inclusion of the name server's IP address in the formula, queries for the same domain name to different name servers may have different transaction identifiers, preventing an attacker from observing a query and predicting the identifiers for other queries. Additional entropy may be provided for generating transaction identifiers by including the port number of the name server and/or a portion of the domain name as inputs to the hash function. If it is determined that the responding server may preserve capitalization in its responses, the upper and lower case characters may be salted within the domain name to provide additional entropy in generating transaction identifiers.

In one aspect, the present invention features a method for generating a DNS query to improve resistance against a DNS attack. The method includes a DNS resolver receiving a request to resolve a domain name. The method also includes the DNS resolver identifying the domain name and an IP address of a DNS server. The method further includes generating a transaction identifier for a DNS query by applying a one-way hash function to an input of a predetermined random number, the IP address of the DNS server and the domain name. The method also includes the DNS resolver transmitting a DNS query for the domain name to the DNS server, the DNS query identified by the generated transaction identifier.

In some embodiments, the method includes the DNS resolver identifying the IP port number of the DNS server. In further embodiments, the method includes generating the transaction identifier for the DNS query by applying the one-way hash function to the input of a predetermined random number, the IP address and the port of the DNS server, and the domain name. In yet further embodiments, the domain name input to the one-way hash function may comprise a portion of the domain name to be resolved.

In one embodiment, the method includes changing the predetermined random number input to the one-way hash function at a predetermined frequency. In another embodiment, the method includes changing the predetermined random number in response to an event. In other embodiments, the method includes generating the same transaction identifier for DNS queries to resolve the same domain name transmitted to the same DNS server. In still other embodiments, the method includes encoding one or more fields of the DNS request and using the encoded one or more fields as input to the one-way hash function to generate the transaction identifier. In other embodiments, the method includes encoding the domain name by capitalizing one or more characters of the domain name and generating the transaction identifier by using the encoded domain name as the input of the domain name to the one-way hash function. In still other embodiments, the method further comprises encoding the domain name input to the one-way hash function by using a punycode or a RACE encoding scheme.

In another embodiment, the method further comprises the DNS resolver determining that the DNS server rewrites or normalizes responses. In response to the determination, the DNS resolver may not encode a portion of the DNS query. In other embodiments, the method further comprises the DNS resolver determining that the destination is not rewriting responses. In response to the determination, the DNS resolver may encode a portion of the DNS query and include the encoded portion in the transaction identifier. In yet other embodiments, the method further includes the DNS resolver communicating the input of the IP address of the destination and the domain name to a transaction identifier generator.

In another aspect, the present invention features a system for generating a DNS query to improve resistance against a DNS attack. The system includes a DNS resolver and a transaction identifier generator. The DNS resolver receives a request to resolve a domain name and identifies the domain name and an IP address of a destination of the request. The transaction identifier generator that generates a transaction identifier by applying a one-way hash function to an input of a predetermined random number, the IP address of the destination and the domain name. The DNS resolver forms the DNS query using the generated transaction identifier and transmits the DNS query for the domain name to the destination.

In one embodiment, the DNS resolver identifies a port of the destination of the request. In further embodiments, the transaction identifier generator may generate the transaction identifier by applying the one-way hash function to the input of the predetermined random number, the internet protocol address and the port of the destination and the domain name. In still further embodiments, the domain name input to the one-way hash function may comprise a portion of the domain name to be resolved.

In another embodiment, the transaction identifier generator changes the predetermined random number at a predetermined frequency. In yet another embodiment, the transaction identifier generator changes the predetermined random number in response to an event. In still another embodiment, the transaction identifier generator generates the same transaction identifier for inputs identifying the same domain name and the same destination.

In other embodiments, the DNS resolver encodes one or more fields of the DNS request and communicates the encoded one or more fields as input to the transaction identifier generator to generate the transaction identifier. In another embodiment, the DNS resolver encodes the domain name by capitalizing one or more characters of the domain name and communicates the encoded domain name as the input of the domain name to the transaction identifier generator. In still another embodiment, the DNS resolver encodes the domain name by using a punycode or a RACE encoding scheme. In other embodiments, the DNS resolver may determine that the destination rewrites or normalizes responses, and in response to the determination the DNS resolver may not encode a portion of the DNS query. In yet other embodiments, the DNS resolver may determine that the destination does not rewrite responses, and in response to the determination the DNS resolver may encode a portion of the DNS query and communicate the encoded portion as input to the transaction identifier generator to generate the transaction identifier. In still other embodiments, the DNS resolver may reside on a client, a server, or an intermediary.

The details of various embodiments of the invention are set forth in the accompanying drawings and the description below.

### Brief Description of the Figures

The foregoing and other objects, aspects, features, and advantages of the invention will become more apparent and better understood by referring to the following description taken in conjunction with the accompanying drawings, in which:
FIG. 1A is a block diagram of an embodiment of a network environment for a client to access a server via an appliance;
FIG. 1B is a block diagram of another embodiment of an environment for delivering a computing environment from a server to a client via;
FIGs. 1C and 1D are block diagrams of embodiments of a computing device;
FIG. 2 is a block diagram of an embodiment of a domain name resolver; and
FIG. 3 is a flow diagram of an embodiment of steps of a method for generating a DNS query with improved resistance against a DNS attack.

The features and advantages of the present invention will become more apparent from the detailed description set forth below when taken in conjunction with the drawings, in which like reference characters identify corresponding elements throughout. In the drawings, like reference numbers generally indicate identical, functionally similar, and/or structurally similar elements.

### Detailed Description of the Invention

For purposes of reading the description of the various embodiments below, the following descriptions of the sections of the specification and their respective contents may be helpful:

Section A describes a network environment and computing environment which may be useful for practicing embodiments described herein;

Section B describes embodiments of systems and methods for responding to DNS name resolution requests, transmitting requests to name servers, receiving responses from name servers, and transmitting responses to DNS name resolution requests; and

Section C describes embodiments of systems for and methods of generating DNS queries with improved resistance to DNS attacks.

### A. Network and Computing Environment

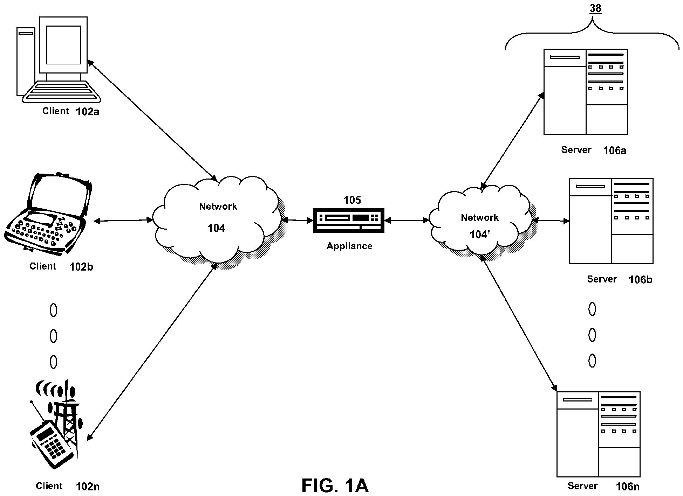

Prior to discussing the specifics of embodiments of the systems and methods of an appliance and/or client, it may be helpful to discuss the network and computing environments in which such embodiments may be deployed. Referring now to Figure 1A, an embodiment of a network environment is depicted. In brief overview, the network environment comprises one or more clients 102a-102n (also generally referred to as local machine(s) 102, or client(s) 102) in communication with one or more servers 106a-106n (also generally referred to as server(s) 106, or remote machine(s) 106) via one or more networks 104, 104' (generally referred to as network 104). In some embodiments, a client 102 communicates with a server 106 via an appliance 105.

Although FIG. 1A shows a network 104 and a network 104' between the clients 102 and the servers 106, the clients 102 and the servers 106 may be on the same network 104. The networks 104 and 104' can be the same type of network or different types of networks. The network 104 and/or the network 104' can be a local-area network (LAN), such as a company Intranet, a metropolitan area network (MAN), or a wide area network (WAN), such as the Internet or the World Wide Web. In one embodiment, network 104' may be a private network and network 104 may be a public network. In some embodiments, network 104 may be a private network and network 104' a public network. In another embodiment, networks 104 and 104' may both be private networks. In some embodiments, clients 102 may be located at a branch office of a corporate enterprise communicating via a WAN connection over the network 104 to the servers 106 located at a corporate data center.

The network 104 and/or 104' be any type and/or form of network and may include any of the following: a point to point network, a broadcast network, a wide area network, a local area network, a telecommunications network, a data communication network, a computer network, an ATM (Asynchronous Transfer Mode) network, a SONET (Synchronous Optical Network) network, a SDH (Synchronous Digital Hierarchy) network, a wireless network and a wireline network. In some embodiments, the network 104 may comprise a wireless link, such as an infrared channel or satellite band. The topology of the network 104 and/or 104' may be a bus, star, or ring network topology. The network 104 and/or 104' and network topology may be of any such network or network topology as known to those ordinarily skilled in the art capable of supporting the operations described herein.

As shown in FIG. 1A, the appliance 105, which also may be referred to as an interface unit 105 or gateway 105, is shown between the networks 104 and 104'. In some embodiments, the appliance 105 may be located on network 104. For example, a branch office of a corporate enterprise may deploy an appliance 105 at the branch office. In other embodiments, the appliance 105 may be located on network 104'. For example, an appliance 105 may be located at a corporate data center. In yet another embodiment, a plurality of appliances 105 may be deployed on network 104. In some embodiments, a plurality of appliances 105 may be deployed on network 104'. In other embodiments, a plurality of appliances 105 may be deployed on both networks 104 and 104'. In other embodiments, the appliance 105 could be a part of any client 102 or server 106 on the same or different network 104, 104' as the client 102. One or more appliances 105 may be located at any point in the network or network communications path between a client 102 and a server 106.

In some embodiments, the appliance 105 comprises any of the network devices manufactured by Citrix Systems, Inc. of Ft. Lauderdale Florida, such as the Citrix NetScaler™, Citrix WANScaler™, Citrix Repeater™, Citrix Branch Repeater™, or Citrix Branch Repeater™ with Windows Server®. In other embodiments, the appliance 105 includes any of the product embodiments referred to as WebAccelerator and BigIP manufactured by F5 Networks, Inc. of Seattle, Washington. In yet another embodiment, the appliance 105 includes any application acceleration and/or security related appliances and/or software manufactured by Cisco Systems, Inc. of San Jose, California, such as the Cisco ACE Application Control Engine Module service software and network modules, and Cisco AVS Series Application Velocity System.

In one embodiment, the system may include multiple, logically-grouped servers 106. In these embodiments, the logical group of servers may be referred to as a server farm 38. In some of these embodiments, the servers 106 may be geographically dispersed. In some cases, a farm 38 may be administered as a single entity. In other embodiments, the server farm 38 comprises a plurality of server farms 38. In one embodiment, the server farm executes one or more applications on behalf of one or more clients 102.

The servers 106 within each farm 38 can be heterogeneous. One or more of the servers 106 can operate according to one type of operating system platform (e.g., WINDOWS NT, manufactured by Microsoft Corp. of Redmond, Washington), while one or more of the other servers 106 can operate on according to another type of operating system platform (e.g., Unix or Linux). The servers 106 of each farm 38 do not need to be physically proximate to another server 106 in the same farm 38. Thus, the group of servers 106 logically grouped as a farm 38 may be interconnected using a wide-area network (WAN) connection or medium-area network (MAN) connection. For example, a farm 38 may include servers 106 physically located in different continents or different regions of a continent, country, state, city, campus, or room. Data transmission speeds between servers 106 in the farm 38 can be increased if the servers 106 are connected using a local-area network (LAN) connection or some form of direct connection.

Servers 106 may be referred to as a file server, application server, web server, proxy server, or gateway server. In some embodiments, a server 106 may have the capacity to function as either an application server or as a master application server. In one embodiment, a server 106 may include an Active Directory. The clients 102 may also be referred to as client nodes or endpoints. In some embodiments, a client 102 has the capacity to function as both a client node seeking access to applications on a server and as an application server providing access to hosted applications for other clients 102a-102n.

In some embodiments, a client 102 communicates with a server 106. In one embodiment, the client 102 communicates directly with one of the servers 106 in a farm 38. In another embodiment, the client 102 executes a program neighborhood application to communicate with a server 106 in a farm 38. In still another embodiment, the server 106 provides the functionality of a master node. In some embodiments, the client 102 communicates with the server 106 in the farm 38 through a network 104. Over the network 104, the client 102 can, for example, request execution of various applications hosted by the servers 106a-106n in the farm 38 and receive output of the results of the application execution for display. In some embodiments, only the master node provides the functionality required to identify and provide address information associated with a server 106' hosting a requested application.

In one embodiment, the server 106 provides functionality of a web server. In another embodiment, the server 106a receives requests from the client 102, forwards the requests to a second server 106b and responds to the request by the client 102 with a response to the request from the server 106b. In still another embodiment, the server 106 acquires an enumeration of applications available to the client 102 and address information associated with a server 106 hosting an application identified by the enumeration of applications. In yet another embodiment, the server 106 presents the response to the request to the client 102 using a web interface. In one embodiment, the client 102 communicates directly with the server 106 to access the identified application. In another embodiment, the client 102 receives application output data, such as display data, generated by an execution of the identified application on the server 106.

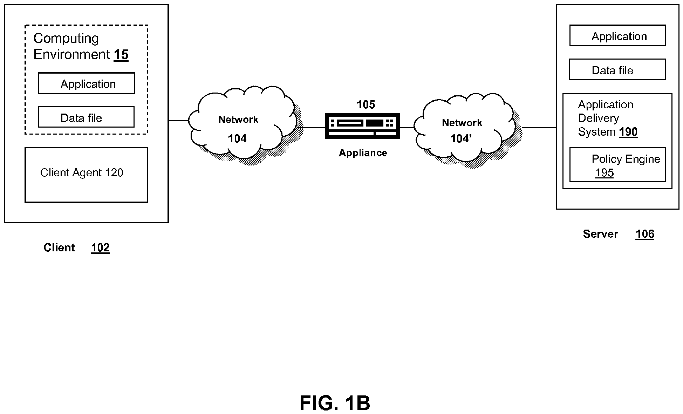

Referring now to FIG. 1B, a network environment for delivering and/or operating a computing environment on a client 102 is depicted. In some embodiments, a server 106 includes an application delivery system 190 for delivering a computing environment or an application and/or data file to one or more clients 102. In brief overview, a client 102 is in communication with a server 106 via network 104, 104' and appliance 105. For example, the client 102 may reside in a remote office of a company, e.g., a branch office, and the server 106 may reside at a corporate data center. The client 102 comprises a client agent 120, and a computing environment 15. The computing environment 15 may execute or operate an application that accesses, processes or uses a data file. The computing environment 15, application and/or data file may be delivered via the appliance 105 and/or the server 106.

In some embodiments, the appliance 105 accelerates delivery of a computing environment 15, or any portion thereof, to a client 102. In one embodiment, the appliance 105 accelerates the delivery of the computing environment 15 by the application delivery system 190. For example, the embodiments described herein may be used to accelerate delivery of a streaming application and data file processable by the application from a central corporate data center to a remote user location, such as a branch office of the company. In another embodiment, the appliance 105 accelerates transport layer traffic between a client 102 and a server 106. The appliance 105 may provide acceleration techniques for accelerating any transport layer payload from a server 106 to a client 102, such as: 1) transport layer connection pooling, 2) transport layer connection multiplexing, 3) transport control protocol buffering, 4) compression and 5) caching. In some embodiments, the appliance 105 provides load balancing of servers 106 in responding to requests from clients 102. In other embodiments, the appliance 105 acts as a proxy or access server to provide access to the one or more servers 106. In another embodiment, the appliance 105 provides a secure virtual private network connection from a first network 104 of the client 102 to the second network 104' of the server 106, such as an SSL VPN connection. In yet other embodiments, the appliance 105 provides application firewall security, control and management of the connection and communications between a client 102 and a server 106.

In some embodiments, the application delivery management system 190 provides application delivery techniques to deliver a computing environment to a desktop of a user, remote or otherwise, based on a plurality of execution methods and based on any authentication and authorization policies applied via a policy engine 195. With these techniques, a remote user may obtain a computing environment and access to server stored applications and data files from any network connected device 100. In one embodiment, the application delivery system 190 may reside or execute on a server 106. In another embodiment, the application delivery system 190 may reside or execute on a plurality of servers 106a-106n. In some embodiments, the application delivery system 190 may execute in a server farm 38. In one embodiment, the server 106 executing the application delivery system 190 may also store or provide the application and data file. In another embodiment, a first set of one or more servers 106 may execute the application delivery system 190, and a different server 106n may store or provide the application and data file. In some embodiments, each of the application delivery system 190, the application, and data file may reside or be located on different servers. In yet another embodiment, any portion of the application delivery system 190 may reside, execute or be stored on or distributed to the appliance 200, or a plurality of appliances.

The client 102 may include a computing environment 15 for executing an application that uses or processes a data file. The client 102 via networks 104, 104' and appliance 105 may request an application and data file from the server 106. In one embodiment, the appliance 105 may forward a request from the client 102 to the server 106. For example, the client 102 may not have the application and data file stored or accessible locally. In response to the request, the application delivery system 190 and/or server 106 may deliver the application and data file to the client 102. For example, in one embodiment, the server 106 may transmit the application as an application stream to operate in computing environment 15 on client 102.

In some embodiments, the application delivery system 190 comprises any portion of the Citrix Access Suite™ by Citrix Systems, Inc., such as the MetaFrame or Citrix Presentation Server™; any portion of the Citrix Delivery Center™ by Citrix Systems, Inc., such as the XenDesktop™, XenApp™, XenServer™, or NetScaler™; and/or any of the Microsoft® Windows Terminal Services manufactured by the Microsoft Corporation. In one embodiment, the application delivery system 190 may deliver one or more applications to clients 102 or users via a remote-display protocol or otherwise via remote-based or server-based computing. In another embodiment, the application delivery system 190 may deliver one or more applications to clients or users via steaming of the application.

In one embodiment, the application delivery system 190 includes a policy engine 195 for controlling and managing the access to, selection of application execution methods and the delivery of applications. In some embodiments, the policy engine 195 determines the one or more applications a user or client 102 may access. In another embodiment, the policy engine 195 determines how the application should be delivered to the user or client 102, e.g., the method of execution. In some embodiments, the application delivery system 190 provides a plurality of delivery techniques from which to select a method of application execution, such as a server-based computing, streaming or delivering the application locally to the client 120 for local execution.

In one embodiment, a client 102 requests execution of an application program and the application delivery system 190 comprising a server 106 selects a method of executing the application program. In some embodiments, the server 106 receives credentials from the client 102. In another embodiment, the server 106 receives a request for an enumeration of available applications from the client 102. In one embodiment, in response to the request or receipt of credentials, the application delivery system 190 enumerates a plurality of application programs available to the client 102. The application delivery system 190 receives a request to execute an enumerated application. The application delivery system 190 selects one of a predetermined number of methods for executing the enumerated application, for example, responsive to a policy of a policy engine. The application delivery system 190 may select a method of execution of the application enabling the client 102 to receive application-output data generated by execution of the application program on a server 106. The application delivery system 190 may select a method of execution of the application enabling the local machine 10 to execute the application program locally after retrieving a plurality of application files comprising the application. In yet another embodiment, the application delivery system 190 may select a method of execution of the application to stream the application via the network 104 to the client 102.

A client 102 may execute, operate or otherwise provide an application, which can be any type and/or form of software, program, or executable instructions such as any type and/or form of web browser, web-based client, client-server application, a thin-client computing client, an ActiveX control, or a Java applet, or any other type and/or form of executable instructions capable of executing on client 102. In some embodiments, the application may be a server-based or a remote-based application executed on behalf of the client 102 on a server 106. In one embodiments the server 106 may display output to the client 102 using any thin-client or remote-display protocol, such as the Independent Computing Architecture (ICA) protocol manufactured by Citrix Systems, Inc. of Ft. Lauderdale, Florida or the Remote Desktop Protocol (RDP) manufactured by the Microsoft Corporation of Redmond, Washington. The application can use any type of protocol and it can be, for example, an HTTP client, an FTP client, an Oscar client, or a Telnet client. In other embodiments, the application comprises any type of software related to VoIP communications, such as a soft IP telephone. In further embodiments, the application comprises any application related to real-time data communications, such as applications for streaming video and/or audio.

In some embodiments, the server 106 or a server farm 38 may be running one or more applications, such as an application providing a thin-client computing or remote display presentation application. In one embodiment, the server 106 or server farm 38 executes as an application, any portion of the Citrix Access Suite™ by Citrix Systems, Inc., such as the MetaFrame or Citrix Presentation Server™; any portion of the Citrix Delivery Center™ by Citrix Systems, Inc., such as the XenDesktop™, XenApp™, XenServer™, or NetScaler™; and/or any of the Microsoft® Windows Terminal Services manufactured by the Microsoft Corporation. In one embodiment, the application is an ICA client, developed by Citrix Systems, Inc. of Fort Lauderdale, Florida. In other embodiments, the application includes a Remote Desktop (RDP) client, developed by Microsoft Corporation of Redmond, Washington. Also, the server 106 may run an application, which for example, may be an application server providing email services such as Microsoft Exchange manufactured by the Microsoft Corporation of Redmond, Washington, a web or Internet server, or a desktop sharing server, or a collaboration server. In some embodiments, any of the applications may comprise any type of hosted service or products, such as GoToMeeting™, GoToWebinar™, GoToMyPC™, or GoToAssist™ provided by Citrix Online Division, Inc. of Santa Barbara, California, WebEx™ provided by WebEx, Inc. of Santa Clara, California, or Microsoft Office Live Meeting provided by Microsoft Corporation of Redmond, Washington.

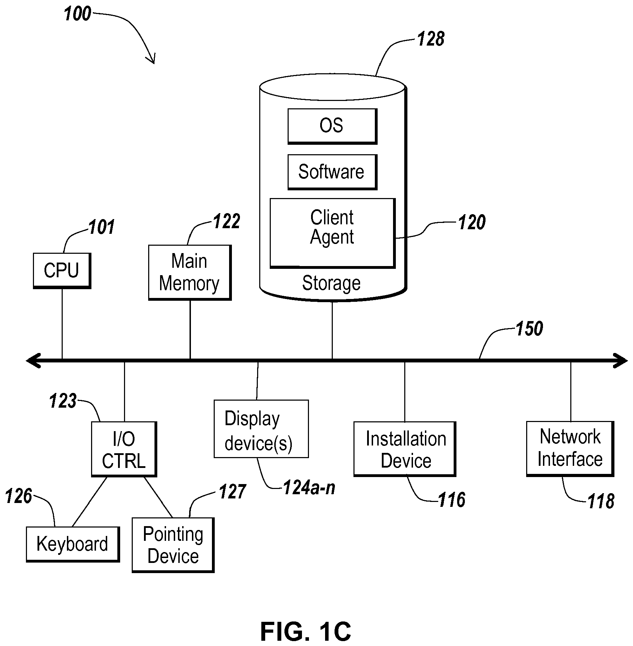

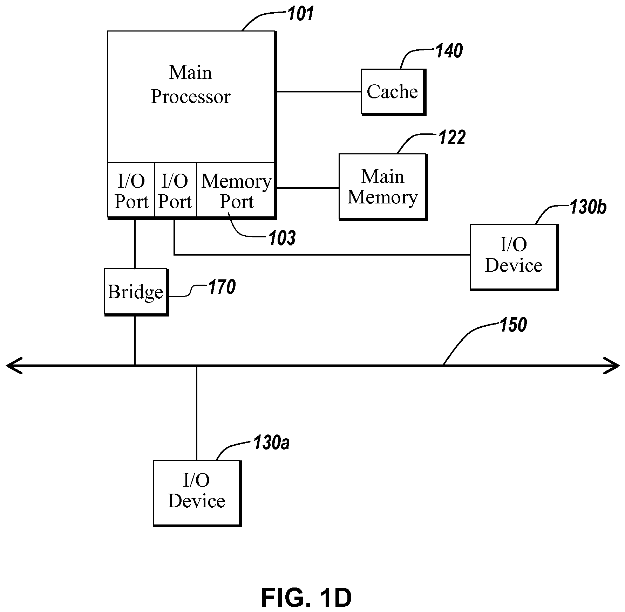

The client 102, server 106, and appliance 105 may be deployed as and/or executed on any type and form of computing device, such as a computer, network device or appliance capable of communicating on any type and form of network and performing the operations described herein. FIGs. 1C and 1D depict block diagrams of a computing device 100 useful for practicing an embodiment of the client 102, server 106 or appliance 105. As shown in FIGs. 1C and 1D, each computing device 100 includes a central processing unit 101, and a main memory unit 122. As shown in FIG. 1C, a computing device 100 may include a visual display device 124, a keyboard 126 and/or a pointing device 127, such as a mouse. Each computing device 100 may also include additional optional elements, such as one or more input/output devices 130a-130b (generally referred to using reference numeral 130), and a cache memory 140 in communication with the central processing unit 101.

The central processing unit 101 is any logic circuitry that responds to and processes instructions fetched from the main memory unit 122. In many embodiments, the central processing unit is provided by a microprocessor unit, such as: those manufactured by Intel Corporation of Mountain View, California; those manufactured by Motorola Corporation of Schaumburg, Illinois; those manufactured by Transmeta Corporation of Santa Clara, California; the RS/6000 processor, those manufactured by International Business Machines of White Plains, New York; or those manufactured by Advanced Micro Devices of Sunnyvale, California. The computing device 100 may be based on any of these processors, or any other processor capable of operating as described herein.

Main memory unit 122 may be one or more memory chips capable of storing data and allowing any storage location to be directly accessed by the microprocessor 101, such as Static random access memory (SRAM), Burst SRAM or SynchBurst SRAM (BSRAM), Dynamic random access memory (DRAM), Fast Page Mode DRAM (FPM DRAM), Enhanced DRAM (EDRAM), Extended Data Output RAM (EDO RAM), Extended Data Output DRAM (EDO DRAM), Burst Extended Data Output DRAM (BEDO DRAM), Enhanced DRAM (EDRAM), synchronous DRAM (SDRAM), JEDEC SRAM, PC100 SDRAM, Double Data Rate SDRAM (DDR SDRAM), Enhanced SDRAM (ESDRAM), SyncLink DRAM (SLDRAM), Direct Rambus DRAM (DRDRAM), or Ferroelectric RAM (FRAM). The main memory 122 may be based on any of the above described memory chips, or any other available memory chips capable of operating as described herein. In the embodiment shown in FIG. 1C, the processor 101 communicates with main memory 122 via a system bus 150 (described in more detail below). FIG. 1C depicts an embodiment of a computing device 100 in which the processor communicates directly with main memory 122 via a memory port 103. For example, in FIG. ID the main memory 122 may be DRDRAM.

FIG. ID depicts an embodiment in which the main processor 101 communicates directly with cache memory 140 via a secondary bus, sometimes referred to as a backside bus. In other embodiments, the main processor 101 communicates with cache memory 140 using the system bus 150. Cache memory 140 typically has a faster response time than main memory 122 and is typically provided by SRAM, BSRAM, or EDRAM. In the embodiment shown in FIG. 1C, the processor 101 communicates with various I/O devices 130 via a local system bus 150. Various busses may be used to connect the central processing unit 101 to any of the I/O devices 130, including a VESA VL bus, an ISA bus, an EISA bus, a MicroChannel Architecture (MCA) bus, a PCI bus, a PCI-X bus, a PCI-Express bus, or a NuBus. For embodiments in which the I/O device is a video display 124, the processor 101 may use an Advanced Graphics Port (AGP) to communicate with the display 124. FIG. 1D depicts an embodiment of a computer 100 in which the main processor 101 communicates directly with I/O device 130 via HyperTransport, Rapid I/O, or InfiniBand. FIG. ID also depicts an embodiment in which local busses and direct communication are mixed: the processor 101 communicates with I/O device 130 using a local interconnect bus while communicating with I/O device 130 directly.

The computing device 100 may support any suitable installation device 116, such as a floppy disk drive for receiving floppy disks such as 3.5-inch, 5.25-inch disks or ZIP disks, a CD-ROM drive, a CD-R/RW drive, a DVD-ROM drive, tape drives of various formats, USB device, hard-drive or any other device suitable for installing software and programs such as any client agent 120, or portion thereof. The computing device 100 may further comprise a storage device 128, such as one or more hard disk drives or redundant arrays of independent disks, for storing an operating system and other related software, and for storing application software programs such as any program related to the client agent 120. Optionally, any of the installation devices 116 could also be used as the storage device 128. Additionally, the operating system and the software can be run from a bootable medium, for example, a bootable CD, such as KNOPPIX®, a bootable CD for GNU/Linux that is available as a GNU/Linux distribution from knoppix.net.

Furthermore, the computing device 100 may include a network interface 118 to interface to a Local Area Network (LAN), Wide Area Network (WAN) or the Internet through a variety of connections including, but not limited to, standard telephone lines, LAN or WAN links (*e.g.,* 802.11, T1, T3, 56kb, X.25), broadband connections (*e.g.,* ISDN, Frame Relay, ATM), wireless connections, or some combination of any or all of the above. The network interface 118 may comprise a built-in network adapter, network interface card, PCMCIA network card, card bus network adapter, wireless network adapter, USB network adapter, modem or any other device suitable for interfacing the computing device 100 to any type of network capable of communication and performing the operations described herein.

A wide variety of I/O devices 130a-130n may be present in the computing device 100. Input devices include keyboards, mice, trackpads, trackballs, microphones, and drawing tablets. Output devices include video displays, speakers, inkjet printers, laser printers, and dye-sublimation printers. The I/O devices 130 may be controlled by an I/O controller 123 as shown in FIG. 1C. The I/O controller may control one or more I/O devices such as a keyboard 126 and a pointing device 127, e.g., a mouse or optical pen. Furthermore, an I/O device may also provide storage 128 and/or an installation medium 116 for the computing device 100. In still other embodiments, the computing device 100 may provide USB connections to receive handheld USB storage devices such as the USB Flash Drive line of devices manufactured by Twintech Industry, Inc. of Los Alamitos, California.

In some embodiments, the computing device 100 may comprise or be connected to multiple display devices 124a-124n, which each may be of the same or different type and/or form. As such, any of the I/O devices 130a-130n and/or the I/O controller 123 may comprise any type and/or form of suitable hardware, software, or combination of hardware and software to support, enable or provide for the connection and use of multiple display devices 124a-124n by the computing device 100. For example, the computing device 100 may include any type and/or form of video adapter, video card, driver, and/or library to interface, communicate, connect or otherwise use the display devices 124a-124n. In one embodiment, a video adapter may comprise multiple connectors to interface to multiple display devices 124a-124n. In other embodiments, the computing device 100 may include multiple video adapters, with each video adapter connected to one or more of the display devices 124a-124n. In some embodiments, any portion of the operating system of the computing device 100 may be configured for using multiple displays 124a-124n. In other embodiments, one or more of the display devices 124a-124n may be provided by one or more other computing devices, such as computing devices 100a and 100b connected to the computing device 100, for example, via a network. These embodiments may include any type of software designed and constructed to use another computer's display device as a second display device 124a for the computing device 100. One ordinarily skilled in the art will recognize and appreciate the various ways and embodiments that a computing device 100 may be configured to have multiple display devices 124a-124n.

In further embodiments, an I/O device 130 may be a bridge 170 between the system bus 150 and an external communication bus, such as a USB bus, an Apple Desktop Bus, an RS-232 serial connection, a SCSI bus, a FireWire bus, a FireWire 800 bus, an Ethernet bus, an AppleTalk bus, a Gigabit Ethernet bus, an Asynchronous Transfer Mode bus, a HIPPI bus, a Super HIPPI bus, a SerialPlus bus, a SCI/LAMP bus, a FibreChannel bus, or a Serial Attached small computer system interface bus.

A computing device 100 of the sort depicted in FIGs. 1C and 1D typically operate under the control of operating systems, which control scheduling of tasks and access to system resources. The computing device 100 can be running any operating system such as any of the versions of the Microsoft® Windows operating systems, the different releases of the Unix and Linux operating systems, any version of the Mac OS® for Macintosh computers, any embedded operating system, any real-time operating system, any open source operating system, any proprietary operating system, any operating systems for mobile computing devices, or any other operating system capable of running on the computing device and performing the operations described herein. Typical operating systems include: WINDOWS 3.x, WINDOWS 95, WINDOWS 98, WINDOWS 2000, WINDOWS NT 3.51, WINDOWS NT 4.0, WINDOWS CE, WINDOWS XP, WINDOWS VISTA, and WINDOWS 7, all of which are manufactured by Microsoft Corporation of Redmond, Washington; MacOS, manufactured by Apple Computer of Cupertino, California; OS/2, manufactured by International Business Machines of Armonk, New York; and Linux, a freely-available operating system distributed by Caldera Corp. of Salt Lake City, Utah, or any type and/or form of a Unix operating system, among others.

In other embodiments, the computing device 100 may have different processors, operating systems, and input devices consistent with the device. For example, in one embodiment the computer 100 is a Treo 180, 270, 1060, 600 or 650 smart phone manufactured by Palm, Inc. In this embodiment, the Treo smart phone is operated under the control of the PalmOS operating system and includes a stylus input device as well as a five-way navigator device. In another embodiment, the computer 100 is an iPhone smart phone manufactured by Apple Computers, Inc. In this embodiment, the iPhone is operated under the control of the iPhone OS operating system and includes a multi-touch screen interface. Moreover, the computing device 100 can be any workstation, desktop computer, laptop or notebook computer, server, handheld computer, mobile telephone, any other computer, or other form of computing or telecommunications device that is capable of communication and that has sufficient processor power and memory capacity to perform the operations described herein.

### B. DNS Resolver Architecture

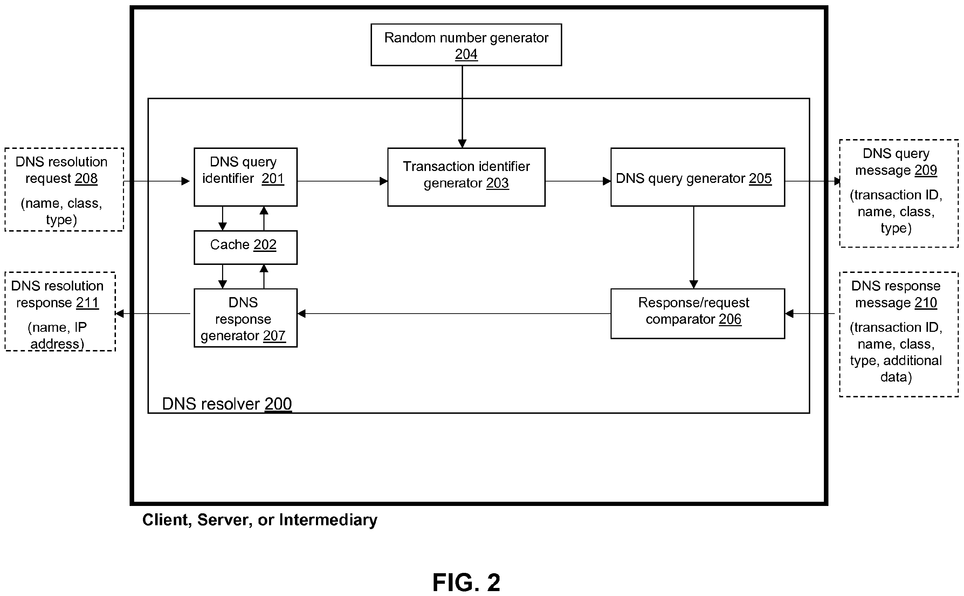

FIG. 2 describes an embodiment of a DNS resolver 200 residing on a server, client, or intermediary. As shown in FIG. 2, the DNS resolver 200 includes a DNS query identifier 201, a memory cache 202, a transaction identifier generator 203, a DNS query generator 205, a comparator 206 for comparing requests and responses, and a DNS response generator 207. The DNS resolver 200 may also receive input numbers from a random number generator 204. The DNS resolver 200 receives DNS resolution requests 208 from hardware or software on the client, server, or intermediary, or from any hardware or software on another client, server, or intermediary. The DNS resolver 200 transmits DNS query messages 209 to DNS name servers, and in turn DNS receives response messages 210. The DNS response messages 210 can also arrive from different sources than the name servers. The DNS resolver 200 also transmits DNS resolution responses 211 to the hardware or software on the same or different client, server, or intermediary that sent the DNS resolution request 208. The simplified architecture shown is provided for illustration purposes only and is not intended to be limiting.

A DNS resolver 200 comprises any type or form of logic, operations or functions to resolve a domain name. The DNS resolver 200 may comprise any combination of software and hardware. The DNS resolver 200 may comprise a library, service, daemon, process, function, or subroutine. Although the random number generator 204 shown in FIG. 2 is external to the DNS resolver 200, in some embodiments the DNS resolver 200 may also include the random number generator 204. In other embodiments, the random number generator 204 may be on another software or hardware system. The DNS resolver 200 may include functionality for transmitting and receiving data in any format or protocol, such as Internet Protocol. As such, in some embodiments, the DNS resolver 200 may include hardware or communicate with hardware capable of performing this functionality. In other embodiments, the DNS resolver 200 may operate within a virtual machine and may include or communicate with virtual hardware.

The DNS query identifier 201 comprises one or more programs, tasks, services, processes or executable instructions to provide logic, rules, functions, or operations for receiving and handling a DNS resolution request 208. The DNS query identifier 201 checks the resolver cache 202 to determine if a previously-received DNS response message corresponding to the DNS resolution request 208 has been stored in the resolver cache 202. If so, the DNS response generator 207 transmits a DNS resolution response 211 to the requestor using the previously-received DNS response message in the resolver cache 202. If the answer is unknown, the DNS query identifier 201 checks that the DNS resolution request 208 is a fully qualified domain name query or unqualified multi-label domain name query. If the DNS query identifier 201 determines that the DNS resolution request 208 is not a fully qualified domain name query or unqualified multi-label query, the DNS query identifier 201 consults the cache 202 for a suffix search list. If a suffix search list does not reside in the cache 202, the DNS query identifier 201 appends a global DNS suffix to the DNS resolution request 208. If a suffix search list does reside in the cache 202, the DNS query identifier 201 appends a primary DNS suffix to the DNS resolution request 208. The DNS query identifier 201 consults the cache 202 to determine the IP address or addresses of a domain name server or servers from which to request an answer. In some embodiments, the DNS query identifier 201 consults the cache 202 to determine the port or ports of the domain name server or servers.

In some embodiments, the domain name requested is an ASCII name. In other embodiments, the domain name requested is part of the international domain name system and is encoded in Row-based ASCII Compatible Encoding (RACE) or punycode. The international domain name may be encoded by the DNS resolver 200 or may be already encoded when received by the DNS query identifier 201. In some embodiments, the DNS query identifier 201 consults the cache 202 to determine if each domain name server to be contacted is compliant with IETF RFC 4343 (Domain Name System Case Insensitivity Clarification). In some embodiments if a domain name server is RFC 4343 compliant, the DNS query identifier 201 may retain mixed capitalization of the domain name as received in the DNS resolution request 208. In other embodiments where a domain name server is RFC 4343 compliant, the DNS query identifier 201 may encode random capitalization in the domain name.

The cache 202 may comprise any type and form of data structure, implemented in any combination of hardware and software. In some embodiments, the cache 202 may comprise a database, a flat file, dictionary, registry, index, lookup table, or any other repository capable of storing DNS resource records in any format. The cache 202 may include any associated logic and control functions for recording and obtaining DNS resource records. Once DNS resource records are stored in the cache 202, the DNS resolver 200 can use the cached copy rather than re-transmitting a DNS query message for the resource, thereby reducing access time and use of network bandwidth. In some embodiments, the cache 202 may include an associated memory element, including RAM, Flash memory, or a portion of a disk drive. In other embodiments, the cache 202 may comprise a data object in main memory unit 122 or cache memory 140, discussed above in connection with FIGs. 1C and 1D, or any combination thereof. In still other embodiments, the cache 202 may comprise any type of integrated circuit, such as a Field Programmable Gate Array (FPGA) or a Programmable Logic Device (PLD). In some embodiments, the cache 202 may have a fixed maximum size. In other embodiments, there may be no such limitation. Furthermore, the cache 202 may include logic or functionality for invalidating or removing cached DNS resource records based on the expiration of a time period or upon receipt of an invalidation command from the DNS resolver 200. The logic or functionality may allow invalidation or removal of single records, groups of records, or all records residing in the cache 202.

The random number generator 204 may comprise any type and form of software or hardware, or any combinations thereof, for generating random or pseudo-random numbers. In some embodiments, the random number generator 204 is within the DNS resolver 200. In other embodiments, the random number generator 204 is in the same client, server, or intermediary as the DNS resolver 200. In still other embodiments, the random number generator 204 is separate from the client, server, or intermediary that includes the DNS resolver 200. In these embodiments, the random number generator 204 may communicates with the DNS resolver over any type and form of network or communications device or protocol. The random number generator 204 generates and transmits random or pseudo-random numbers to the transaction identifier generator 203 in the DNS resolver 200. The random or pseudo-random numbers can be of any length. In some embodiments, the number length is at least as long as the length of the requested domain name. For example, under IETF RFC 1034, the maximum length of a fully qualified domain name is 255 octets, or 2040 bits. In other embodiments, the random or pseudo-random number may be shorter or longer. In some embodiments, the random number generator 204 may generate a new random or pseudo-random number for each new DNS resolution request received by the DNS resolver 200. In other embodiments, the same random or pseudo-random number may be used for multiple transaction identifiers, reducing the need for new random or pseudo-random numbers for each request. In some embodiments, the random number generator 204 may generate a new random or pseudo-random number at a predetermined frequency. Higher frequencies may result in higher computation costs, while lower frequencies may result in less resistance to attack. In other embodiments, the random number generator 204 may generate a new random or pseudo-random number in response to an event. For example, the random number generator 204 may generate a new random number in response to every fifth or tenth DNS resolution request 208 received by the DNS resolver 200. For another example, the random number generator 204 may generate a new random number in response to every invalidation of a DNS response record in the cache 202. In these embodiments, the event that causes the random number generator 204 to generate a new random or pseudo-random number may be any event capable of triggering such functionality within the random number generator 204, such as closing or opening a switch, changing a value in a memory register, executing a function call, or accessing a memory location.

The transaction identifier generator 203 comprises a process, logic, function, service, task, subroutine, or executable instructions for creating or providing a transaction identifier, such as for a DNS query. As defined by IETF RFC 1035, the DNS transaction identifier is a 16-bit field in the header of DNS query message 209. However, in other protocols, the transaction identifier may be of different lengths or formats. In some embodiments, the queried domain name server responds to a DNS query message 209 with a DNS response message 210 including an identical DNS transaction identifier, associating the response with the query. In some embodiments, however, there may be multiple DNS query messages 209 sent by the DNS resolver 200 in response to multiple DNS resolution requests 208 before any DNS response message 210 is received. The transaction identifier allows the DNS resolver 200 to identify which outstanding request is associated with which response. The sent and received transaction identifiers are compared by the response/request comparator 206, and if the received transaction identifier matches no outstanding DNS query message 209, the DNS response message 210 is discarded by the DNS resolver 200. If the received transaction identifier does match an outstanding DNS query message 209, the DNS response message 210 is passed to the DNS response generator 207. To generate a transaction identifier, the transaction identifier generator 203 may perform a cryptographic hashing function using inputs comprising the random or pseudo-random number received from the random number generator 204, the IP address of the domain name server to be queried, and the domain name or a portion of the domain name requested. In some embodiments, the inputs to the transaction identifier generator 203 hash function may include the port number of the domain name server to be queried. In further embodiments, the inputs to the hash function may include the domain name encoded with capitalization. In yet further embodiments, the inputs to the hash function may include the domain name encoded in punycode or RACE. The cryptographic hash function used to create the transaction identifier may be any hash function, with or without collision resistance, such as MD5, SHA-1, SHA-256, or any other known or currently unknown hash function or combination of hash functions. In some embodiments, the output of the cryptographic hash function may be compressed to 16 bits. In other embodiments, the output may be truncated or shortened through any other means to 16 bits. In still other embodiments, the output of the cryptographic hash function may be shortened, truncated, or extended in any means to achieve the length of the transaction identifier required by the protocol format of the DNS query message 209. In further embodiments, the cryptographic hashing function may be collision resistant or collision free.

The DNS query generator 205 comprises a process, logic, function, service, task, subroutine, or executable instructions for creating any type and form of DNS query message 209. The DNS query message 209 may be created in compliance with the standard DNS query message format defined in IETF RFC 1035, or may be created in any other desired format. The DNS query message 209 may include a transaction identifier received from the transaction identifier generator 203. The DNS query message 209 may include a question entry of the domain name queried received from the DNS query identifier 201. The question entry may include a domain name, class, and type, as described in RFC 1035, or may contain more or fewer information as dictated by the query message format. The DNS query message 209 may be transmitted by the DNS resolver 200 to the address or addresses of the domain name server or servers selected by the DNS query identifier 201 from the cache 202. In some embodiments, the DNS query message 209 may be stored in a memory element associated with the response/request comparator 206. In other embodiments, the DNS query message 209 may be stored in a memory element associated with the DNS query generator 205, the cache 202, or any other memory element associated with or accessible by the DNS resolver 200. The stored DNS query message may be marked, flagged or recorded in such a way as to identify the query as an outstanding query. In such embodiments, the DNS resolver 200 may include functionality for invalidating or removing markings or flags or deleting the stored DNS query once it is no longer outstanding. In some embodiments, the DNS query message 209 may be transmitted by the DNS resolver 200 multiple times, such as in response to expiration of a time-to-live period.

The response/request comparator 206 comprises a process, logic, function, service, task, subroutine, or executable instructions for comparing a DNS response message 210 with a DNS query message 209. For example, the response/request comparator 206 may compare a DNS response message 210 received by the DNS resolver 200 with a DNS query message 209 sent by the DNS resolver 200. In some embodiments, the response/request comparator 206 may compare a received DNS response message 210 with a DNS query message marked as an outstanding query as discussed above. The response/request comparator 206 may check if the DNS response message 210 has apparently come from the same IP address and port of the domain name server to whom the DNS query message 209 was sent. Furthermore, in some embodiments, the response/request comparator 206 may check if the DNS response message 210 has the same transaction identifier as the DNS query message 209 that was sent. In these embodiments, if the response/request comparator 206 determines that the DNS response message 210 does not match the DNS query message 209, the comparator 206 disregards the DNS response message 210. In further embodiments, where the domain name server queried is RFC 4343 compliant, the response/request comparator 206 may compare capitalization of the domain name in the transmitted DNS query message 209 and received DNS response message 210. In these embodiments, the response/request comparator 206 may instruct the DNS resolver 200 to disregard the DNS response message 210, responsive to a determination that the capitalization does not match. If the response/request comparator 206 identifies the DNS response message 210 as matching an outstanding DNS query message 209, it may, in some embodiments, pass the DNS response message 210 as a validated response to the DNS response generator 207. The response/request comparator 206 may also invalidate or remove markings or flags or delete memory entries identifying the DNS query message 209 as outstanding, or instruct another process to do so.

The DNS response generator 207 comprises a process, logic, function, service, task, subroutine, or executable instructions for generating and/or sending a DNS resolution response 211. The DNS response generator 207 may receive a validated DNS response message 210 from the response/request comparator 206. In some embodiments, the DNS response generator 207 may inspect the DNS response message 210 to determine if it is fully responsive to the DNS resolution request 208. A fully responsive message contains the final address sought. For example, a request for the address of *www.example.com* may return a response that the domain name *www.example.com* is located at *208.77.188.166.* A non-fully responsive message to the query for the address of *www.example.com* may return a response that the domain name server for *example.com* is located at *208.77.188.1,* but be silent on the address of *www.example.com.* In some embodiments, if the DNS response message 210 is not fully responsive to the DNS resolution request 208, the DNS response generator 207 may record any partial response or additional name server information in the cache 202. Furthermore, the DNS query identifier 201 may create a new iteration of the query using the partial response or additional name server information. In some embodiments, if the DNS response message 210 is fully responsive to the DNS resolution request 208, the DNS response generator 207 may record the response in the cache 202. The DNS response generator 207 may send a DNS resolution response 211 to the originally requesting software or hardware on the same or different client, server, or intermediary.

The DNS resolution request 208 is a data packet or packets comprising a DNS name to be resolved. The DNS resolution request 208 may include a fully qualified domain name or a portion of a domain name; a DNS query type; and a DNS query class. In some embodiments, the DNS resolution request 208 comes from a software or hardware system on the same client, server, or intermediary. In other embodiments, the DNS resolution request 208 comes from a software or hardware system on another client, server, or intermediary.

The DNS query message 209 is a data packet or packets comprising a request to a name server to identify a domain name. The DNS query message 209 may include a transaction identifier and a question entry, as discussed above in connection with the DNS query generator 205. The DNS query message 209 may be transmitted over TCP, UDP, or any other protocol known or currently unknown for allowing communication over a network.

The DNS response message 210 is a data packet or packets comprising a response to a DNS query message 210. The DNS query message 210 may include a transaction identifier. The transaction identifier may be identical, similar, or different from the transaction identifier of an outstanding DNS query message 209. The DNS query message 210 may include a response entry. The response entry may include a domain name, class, or type as described in RFC 1035, or may contain more or fewer information as dictated by the query message format. The response entry may also include additional information, such as the address of an authoritative name server for the domain name requested. The DNS query message 210 may be transmitted over TCP, UDP, or any other type and form of protocol for allowing communication over a network.

The DNS resolution response 211 is a data packet or packets comprising a response to a DNS resolution request 208. The DNS resolution response 211 may include a domain name and IP address corresponding to the domain name requested in the DNS resolution request 208. In some embodiments, the DNS resolution response 211 may include a message that the domain name could not be located.

### C. DNS Query Generation

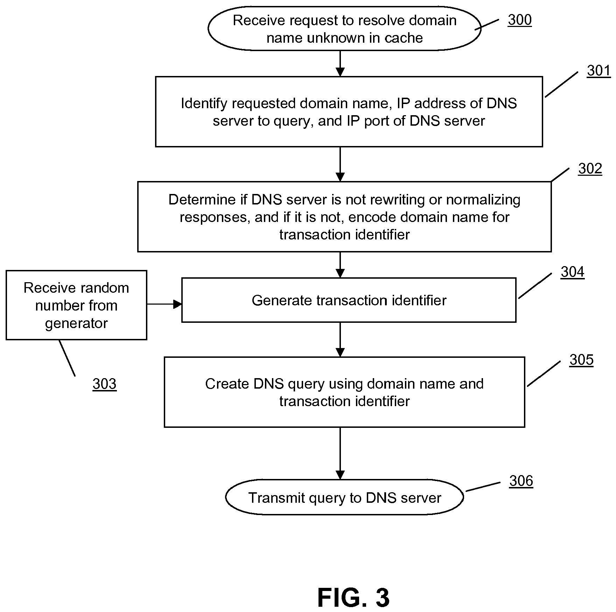

FIG. 3 describes an embodiment of steps for a method of generating a transaction identifier for a DNS query message. In brief overview, at step 300, a request is received to resolve a domain name. At step 301, the request is parsed and the IP address and port of a domain name server with the domain in its zone of authority or a delegated zone is determined. At step 302, the cache is consulted to determine if the domain name server to be queried rewrites or normalizes mixed-capitalization domain names; if the domain name server does not do so, capitalization shifts may be made in the characters of the requested domain name. At step 303, a random or pseudo-random number is generated for a salt input to a cryptographic hashing function. At step 304, a transaction identifier is created as an output of the cryptographic hashing function. At step 305, the DNS query message is created. At step 306, the DNS query message is transmitted to the domain name server to be queried. In some embodiments, this process may be repeated multiple times for the same request to query multiple domain name servers. In further embodiments, this process may be repeated iteratively or recursively where DNS answers fail to fully answer the DNS request, but indicate a more authoritative name server to query.

In further details, at step 300, the DNS resolver may receive a request to resolve a domain name. In some embodiments, this request may come from a web browser or similar application. In other embodiments, this request may come from a kernel service, function, daemon, or other executable code residing in hardware, software, or any combination thereof. In some embodiments, the source of the request may be on the same client, server, or intermediary as the DNS resolver. In other embodiments, the source of the request may be from a different client, server, or intermediary on the same or a different network. The DNS request may be for a full or partial domain name. The DNS request may include a domain class and domain type. In some embodiments, the DNS request may include wildcard characters in the name or class or type, signifying that all records relevant to a domain name or partial domain name or class or type are being requested. If a relevant fully-responsive DNS record resides in the DNS resolver's cache, a response containing the information in the DNS record may be returned to the requestor. In such a case, no further steps of generating a DNS query may need to be taken.

At step 301, the DNS resolver may select a domain name server to query from the index of name servers in the cache. In some embodiments, the DNS resolver may select a preferred name server. In other embodiments, the DNS resolver may select the name server with the narrowest zone of authority containing the requested domain listed in the index of name servers in the cache. In further embodiments, the DNS resolver may select the name server for the root zone. Once a name server to be queried has been selected, the DNS resolver retrieves the name server's IP address and port number from the index of name servers in the cache.

At step 302, the DNS resolver may consult the cache to determine if the domain name server to be queried rewrites or normalizes responses. In some embodiments, the DNS resolver may determine that the name server rewrites responses by the presence and content of additional data fields in the cached resource record. In other embodiments, the DNS resolver may determine that the name server rewrites responses by comparing prior mixed capitalization domain name queries to the name server with responses from the same name server for preservation of capitalization. If the domain name server to be queried does not rewrite or normalize responses, in some embodiments the DNS resolver may shift any or all of the characters of the domain name between upper and lower case.

At step 303, the random number generator generates a random or pseudo-random number. In one embodiment, the random number generator passes the random or pseudo-random number to the transaction identifier generator. In other embodiments, the transaction identifier generator obtains or retrieves the random or pseudo-random number from a memory element associated with the random number generator. In some embodiments, a new random or pseudo-random number is passed to the cryptographic hashing function for each new DNS query. In other embodiments, a random or pseudo-random number may be reused for multiple DNS queries. In further embodiments, the random or pseudo-random number may be updated at a predetermined frequency. In other embodiments, the random or pseudo-random number may be updated in response to an event, as discussed above in connection the random number generator 204 and Fig. 2.

At step 304, the transaction identifier generator performs a cryptographic hashing function on inputs comprising the random or pseudo-random number, the IP address of the domain name server to be queried, and the domain name or a portion of the domain name requested. The cryptographic hashing function may be any hash function or combination of hash functions, including MD5, SHA-1, SHA-256, or any other hash function or functions currently known or unknown. For example, in one embodiment, the transaction identifier generator may append the input bits of the random number, the IP address of the domain name server and the domain name to create a string of bits. In this example embodiment, the transaction identifier generator may use a combination of addition, exclusive-or (XOR), and constant rotations of adjacent bits or groups of bits to convert the string of bits into a cryptographic hash of length specified by the size of the transaction identifier field of the protocol. For instance, the IETF RFC 1035 standard specifies a 16-bit transaction identifier for DNS queries. However, the transaction identifier generator may be configured to output a hash of any length required by the network protocol in use. Although the illustrative example describes appending the input bits to create a string, the transaction identifier generator may use appending, multiplying, adding, subtracting, XORing, or any other method known to those skilled in the art.

At step 305, the DNS query generator creates a DNS query using the requested domain name, domain class and/or domain type received at step 300, and the transaction identifier generated at step 304. As mentioned above at step 300, the DNS request may be for a full or partial domain name, and wildcard characters may be present in the name or class or type, signifying that all records relevant to a domain name or partial domain name or classes or types are being requested. In one embodiment, the DNS query generator may create an RFC 1035 standard DNS query, comprising a header followed by a question. In this embodiment, the header may include the transaction identifier generated at step 304, a query flag, an opcode specifying the type of query, and a recursion flag. The question may include the domain name, the domain type and domain class. In some embodiments, the DNS query generator may also create a message compliant with the relevant protocol, such as TCP or UDP, with the DNS query as a payload. In other embodiments, the DNS query generator may pass the query as a payload to another process or service acting at the application or transport layer.

At step 306, the DNS resolver transmits the DNS query to the domain name server selected at step 301. The domain name server may be on the same network as the DNS resolver or on a different network. In some embodiments, the DNS resolver transmits the DNS query directly. In other embodiments, the DNS resolver passes the DNS query to another process or service responsible for handling network communications, such as a network driver.

While the invention has been particularly shown and described with reference to specific embodiments, it should be understood by those skilled in the art that various changes in form and detail may be made therein without departing from the scope of the invention as defined by the following claims.

## Claims

1. A method for generating a Domain Name Service, DNS, query to improve resistance against a DNS attack, the method comprising:
a) receiving (300), by a DNS resolver (200), a request (208) to resolve a domain name;
b) identifying (301), by the DNS resolver (200), the domain name and an internet protocol address of a DNS server;
c) generating (304) a transaction identifier for a DNS query (209) by applying a one-way hash function to an input (303) of a predetermined random number, the internet protocol address of the DNS server and the domain name; and
d) transmitting (306), by the DNS resolver (200), the DNS query (209) for the domain name to the DNS server, the DNS query (209) identified by the generated transaction identifier.

2. The method of claim 1, wherein step b) further comprises identifying, by the DNS resolver, a port of the DNS server.

3. The method of claim 2, wherein step c) further comprises generating the transaction identifier for the DNS query (209) by applying the one-way hash function to the input of the predetermined random number, the internet protocol address and the port of the DNS server, and the domain name.

4. The method of claim 1, wherein step c) further comprises changing the predetermined random number at a predetermined frequency.

5. The method of claim 1, wherein step c) further comprises changing the predetermined random number in response to an event.

6. The method of claim 1, wherein step c) further comprises generating by the one-way hash function the same transaction identifier for DNS queries to resolve the same domain name transmitted to the same DNS server.

7. The method of claim 1, wherein step c) further comprises encoding one or more fields of the DNS request (208) and using the encoded one or more fields as input to the one-way hash function to generate the transaction identifier.

8. The method of claim 1, wherein step c) further comprises encoding the domain name by capitalizing one or more characters of the domain name and generating the transaction identifier by using the encoded domain name as the input of the domain name to the one-way hash function.

9. The method of claim 1, wherein step c) further comprises encoding the domain name by using one of a punycode or a RACE encoding scheme.

10. The method of claim 1, further comprising determining, by the DNS resolver (200), that the destination is not rewriting responses and in response to the determination encoding a portion of the DNS query (209) and including the encoded portion in the transaction identifier.

11. The method of claim 1, wherein step c) further comprises communicating by the DNS resolver (200) the input of the internet protocol address of the destination and the domain name to a transaction identifier generator (203).

12. A system for generating a Domain Name Service, DNS, query to improve resistance against a DNS attack, the system comprising:
a DNS resolver (200) adapted for receiving a request (208) to resolve a domain name and identifying the domain name and an internet protocol address of a destination of the request;
a transaction identifier generator (203) adapted for generating a transaction identifier by applying a one-way hash function to an input of a predetermined random number, the internet protocol address of the destination and the domain name; and
wherein the DNS resolver (200) is adapted to form a DNS query (209) using the generated transaction identifier and to transmit the DNS query (2069) for the domain name to the destination.

13. The system of claim 12, wherein the DNS resolver (200) is adapted to identify a port of the destination of the request.

14. The system of claim 13, wherein the transaction identifier generator (203) is adapted to generate the transaction identifier for the DNS query (209) by applying the one-way hash function to the input of the predetermined random number, the internet protocol address and the port of the destination and the domain name.

15. The system of claim 12, wherein the transaction identifier generator (203) is adapted to change the predetermined random number at a predetermined frequency.

16. The system of claim 12, wherein the transaction identifier generator (203) is adapted to change the predetermined random number in response to an event.

17. The system of claim 12, wherein the transaction identifier generator (203) is adapted to generate the same transaction identifier for inputs identifying the same domain name and the same destination.

18. The system of claim 12, wherein the DNS resolver (200) is adapted to encode one or more fields of the DNS request and to communicate the encoded one or more fields as input to the transaction identifier generator (203) to generate the transaction identifier.

19. The system of claim 12, wherein the DNS resolver (200) is adapted to encode the domain name by capitalizing one or more characters of the domain name and to communicate the encoded domain name as the input of the domain name to the transaction identifier generator.

20. The system of claim 12, wherein the DNS resolver (200) is adapted to encode the domain name by using one of a punycode or a RACE encoding scheme.

21. The system of claim 12, wherein the DNS resolver (200) is adapted to determine that the destination is not rewriting responses and in response to the determination to encode a portion of the DNS query and to communicate the encoded portion as input to the transaction identifier generator (203) to generate the transaction identifier.

## Patentansprüche

1. Ein Verfahren zum Erzeugen einer Domain-Name-Service(DNS)-Abfrage zum Verbessern des Widerstands gegen einen DNS-Angriff, wobei das Verfahren Folgendes beinhaltet:
a) Empfangen (300), durch einen DNS-Resolver (200), einer Anfrage (208) zum Auflösen eines Domain-Namens;
b) Identifizieren (301), durch den DNS-Resolver (200), des Domain-Namens und einer Internetprotokolladresse eines DNS-Servers;
c) Erzeugen (304) eines Transaktionsidentifikators für eine DNS-Abfrage (209) durch Anwenden einer Einweg-Hash-Funktion auf eine Eingabe (303) einer vorbestimmten Zufallsnummer, der Internetprotokolladresse des DNS-Servers und des Domain-Namens; und
d) Übertragen (306), durch den DNS-Resolver (200), der DNS-Abfrage (209) für den Domain-Namen an den DNS-Server, wobei die DNS-Abfrage (209) durch den erzeugten Transaktionsidentifikator identifiziert wird.

2. Verfahren gemäß Anspruch 1, wobei Schritt b) ferner das Identifizieren, durch den DNS-Resolver, eines Ports des DNS-Servers beinhaltet.

3. Verfahren gemäß Anspruch 2, wobei Schritt c) ferner das Erzeugen des Transaktionsidentifikators für die DNS-Abfrage (209) durch Anwenden der Einweg-Hash-Funktion auf die Eingabe der vorbestimmten Zufallsnummer, der Internetprotokolladresse und des Ports des DNS-Servers und des Domain-Namens beinhaltet.

4. Verfahren gemäß Anspruch 1, wobei Schritt c) ferner das Ändern der vorbestimmten Zufallsnummer mit einer vorbestimmten Frequenz beinhaltet.

5. Verfahren gemäß Anspruch 1, wobei Schritt c) ferner das Ändern der vorbestimmten Zufallsnummer als Antwort auf ein Ereignis beinhaltet.

6. Verfahren gemäß Anspruch 1, wobei Schritt c) ferner das Erzeugen durch die Einweg-Hash-Funktion des gleichen Transaktionsidentifikators für DNS-Abfragen zum Auflösen des gleichen Domain-Namens, die an den gleichen DNS-Server übertragen werden, beinhaltet.

7. Verfahren gemäß Anspruch 1, wobei Schritt c) ferner das Codieren von einem oder mehreren Feldern der DNS-Anfrage (208) und das Verwenden des codierten einen Feldes oder der codierten mehreren Felder als Eingabe für die Einweg-Hash-Funktion zum Erzeugen des Transaktionsidentifikators beinhaltet.

8. Verfahren gemäß Anspruch 1, wobei Schritt c) ferner das Codieren des Domain-Namens durch Großschreiben von einem oder mehreren Zeichen des Domain-Namens und das Erzeugen des Transaktionsidentifikators durch Verwenden des codierten Domain-Namens als die Eingabe des Domain-Namens für die Einweg-Hash-Funktion beinhaltet.

9. Verfahren gemäß Anspruch 1, wobei Schritt c) ferner das Codieren des Domain-Namens durch Verwenden eines von einem Punycode- oder einem RACE-Codierungs-Schema beinhaltet.

10. Verfahren gemäß Anspruch 1, das ferner das Bestimmen, durch den DNS-Resolver (200), dass das Ziel Antworten nicht umschreibt, und als Antwort auf die Bestimmung das Codieren eines Teils der DNS-Abfrage (209) und das Einschließen des codierten Teils in den Transaktionsidentifikator beinhaltet.

11. Verfahren gemäß Anspruch 1, wobei Schritt c) ferner das Übermitteln, durch den DNS-Resolver (200), der Eingabe der Internetprotokolladresse des Ziels und des Domain-Namens für einen Transaktionsidentifikatorerzeuger (203) beinhaltet.

12. Ein System zum Erzeugen einer Domain-Name-Service(DNS)-Abfrage zum Verbessern des Widerstands gegen einen DNS-Angriff, wobei das System Folgendes beinhaltet:
einen DNS-Resolver (200), der zum Empfangen einer Anfrage (208) zum Auflösen eines Domain-Namens und Identifizieren des Domain-Namens und einer Internetprotokolladresse eines Ziels der Anfrage angepasst ist;
einen Transaktionsidentifikatorerzeuger (203), der zum Erzeugen eines Transaktionsidentifikators durch Anwenden einer Einweg-Hash-Funktion auf eine Eingabe einer vorbestimmten Zufallsnummer, der Internetprotokolladresse des Ziels und des Domain-Namens angepasst ist; und
wobei der DNS-Resolver (200) zum Bilden einer DNS-Abfrage (209) durch Verwenden des erzeugten Transaktionsidentifikators und zum Übertragen der DNS-Abfrage (2069) für den Domain-Namen an das Ziel angepasst ist.

13. System gemäß Anspruch 12, wobei der DNS-Resolver (200) zum Identifizieren eines Ports des Ziels der Anfrage angepasst ist.

14. System gemäß Anspruch 13, wobei der Transaktionsidentifikatorerzeuger (203) zum Erzeugen des Transaktionsidentifikators für die DNS-Abfrage (209) durch Anwenden der Einweg-Hash-Funktion auf die Eingabe der vorbestimmten Zufallsnummer, der Internetprotokolladresse und des Ports des Ziels und des Domain-Namens angepasst ist.

15. System gemäß Anspruch 12, wobei der Transaktionsidentifikatorerzeuger (203) zum Ändern der vorbestimmten Zufallsnummer mit einer vorbestimmten Frequenz angepasst ist.

16. System gemäß Anspruch 12, wobei der Transaktionsidentifikatorerzeuger (203) zum Ändern der Zufallsnummer als Antwort auf ein Ereignis angepasst ist.

17. System gemäß Anspruch 12, wobei der Transaktionsidentifikatorerzeuger (203) zum Erzeugen des gleichen Transaktionsidentifikators für Eingaben, die den gleichen Domain-Namen und das gleiche Ziel identifizieren, angepasst ist.

18. System gemäß Anspruch 12, wobei der DNS-Resolver (200) zum Codieren von einem oder mehreren Feldern der DNS-Anfrage und zum Übermitteln des codierten einen oder der codierten mehreren Felder als Eingabe für den Transaktionsidentifikatorerzeuger (203) zum Erzeugen des Transaktionsidentifikators angepasst ist.

19. System gemäß Anspruch 12, wobei der DNS-Resolver (200) zum Codieren des Domain-Namens durch Großschreiben von einem oder mehreren Zeichen des Domain-Namens und zum Übermitteln des codierten Domain-Namens als die Eingabe des Domain-Namens für den Transaktionsidentifikatorerzeuger angepasst ist.

20. System gemäß Anspruch 12, wobei der DNS-Resolver (200) zum Codieren des Domain-Namens durch Verwenden eines von einem Punycode- oder einem RACE-Codierungs-Schema angepasst ist.

21. System gemäß Anspruch 12, wobei der DNS-Resolver (200) zum Bestimmen, dass das Ziel Antworten nicht umschreibt, und als Antwort auf die Bestimmung zum Codieren eines Teils der DNS-Abfrage und zum Übermitteln des codierten Teils als Eingabe für den Transaktionsidentifikatorerzeuger (203) zum Erzeugen des Transaktionsidentifikators angepasst ist.

## Revendications

1. Une méthode pour générer une interrogation de service de noms de domaine (*Domain Name Service,* DNS) pour améliorer la résistance contre une attaque DNS, la méthode comprenant :
a) la réception (300), par un résolveur DNS (200), d'une requête (208) pour résoudre un nom de domaine ;
b) l'identification (301), par le résolveur DNS (200), du nom de domaine et d'une adresse de protocole internet d'un serveur DNS ;
c) la génération (304) d'un identifiant de transaction pour une interrogation DNS (209) en appliquant une fonction de hachage unidirectionnelle à une entrée (303) d'un nombre aléatoire prédéterminé, de l'adresse de protocole internet du serveur DNS et du nom de domaine ; et
d) la transmission (306), par le résolveur DNS (200), de l'interrogation DNS (209) pour le nom de domaine au serveur DNS, l'interrogation DNS (209) étant identifiée par l'identifiant de transaction généré.

2. La méthode de la revendication 1, dans laquelle l'étape b) comprend en outre l'identification, par le résolveur DNS, d'un port du serveur DNS.

3. La méthode de la revendication 2, dans laquelle l'étape c) comprend en outre la génération de l'identifiant de transaction pour l'interrogation DNS (209) en appliquant la fonction de hachage unidirectionnelle à l'entrée du nombre aléatoire prédéterminé, de l'adresse de protocole internet et du port du serveur DNS, et du nom de domaine.

4. La méthode de la revendication 1, dans laquelle l'étape c) comprend en outre le changement du nombre aléatoire prédéterminé à une fréquence prédéterminée.

5. La méthode de la revendication 1, dans laquelle l'étape c) comprend en outre le changement du nombre aléatoire prédéterminé en réponse à un événement.

6. La méthode de la revendication 1, dans laquelle l'étape c) comprend en outre la génération par la fonction de hachage unidirectionnelle du même identifiant de transaction pour des interrogations DNS afin de résoudre le même nom de domaine transmis au même serveur DNS.

7. La méthode de la revendication 1, dans laquelle l'étape c) comprend en outre le codage d'un ou de plusieurs champs de la requête DNS (208) et l'utilisation de ce ou ces champs codés en tant qu'entrée à la fonction de hachage unidirectionnelle pour générer l'identifiant de transaction.

8. La méthode de la revendication 1, dans laquelle l'étape c) comprend en outre le codage du nom de domaine en mettant en majuscules un ou plusieurs caractères du nom de domaine et la génération de l'identifiant de transaction en utilisant le nom de domaine codé en tant qu'entrée du nom de domaine à la fonction de hachage unidirectionnelle.

9. La méthode de la revendication 1, dans laquelle l'étape c) comprend en outre le codage du nom de domaine en utilisant un élément parmi un punycode ou un schéma de codage RACE.

10. La méthode de la revendication 1, comprenant en outre la détermination, par le résolveur DNS (200), du fait que la destination ne réécrit pas de réponses et en réponse à la détermination le codage d'une portion de l'interrogation DNS (209) et l'inclusion de la portion codée dans l'identifiant de transaction.

11. La méthode de la revendication 1, dans laquelle l'étape c) comprend en outre la communication par le résolveur DNS (200) de l'entrée de l'adresse de protocole internet de la destination et du nom de domaine à un générateur d'identifiant de transaction (203).

12. Un système pour générer une interrogation de service de noms de domaine, DNS, pour améliorer la résistance contre une attaque DNS, le système comprenant :
un résolveur DNS (200) conçu pour recevoir une requête (208) pour résoudre un nom de domaine et identifier le nom de domaine et une adresse de protocole internet d'une destination de la requête ;
un générateur d'identifiant de transaction (203) conçu pour générer un identifiant de transaction en appliquant une fonction de hachage unidirectionnelle à une entrée d'un nombre aléatoire prédéterminé, de l'adresse de protocole interne de la destination et du nom de domaine ; et
dans lequel le résolveur DNS (200) est conçu pour former une interrogation DNS (209) en utilisant l'identifiant de transaction généré et pour transmettre l'interrogation DNS (2069) pour le nom de domaine à la destination.

13. Le système de la revendication 12, dans lequel le résolveur DNS (200) est conçu pour identifier un port de la destination de la requête.

14. Le système de la revendication 13, dans lequel le générateur d'identifiant de transaction (203) est conçu pour générer l'identifiant de transaction pour l'interrogation DNS (209) en appliquant la fonction de hachage unidirectionnelle à l'entrée du nombre aléatoire prédéterminé, de l'adresse de protocole internet et du port de la destination et du nom de domaine.

15. Le système de la revendication 12, dans lequel le générateur d'identifiant de transaction (203) est conçu pour changer le nombre aléatoire prédéterminé à une fréquence prédéterminée.

16. Le système de la revendication 12, dans lequel le générateur d'identifiant de transaction (203) est conçu pour changer le nombre aléatoire prédéterminé en réponse à un événement.

17. Le système de la revendication 12, dans lequel le générateur d'identifiant de transaction (203) est conçu pour générer le même identifiant de transaction pour des entrées identifiant le même nom de domaine et la même destination.

18. Le système de la revendication 12, dans lequel le résolveur DNS (200) est conçu pour coder un ou plusieurs champs de la requête DNS et pour communiquer ce ou ces champs codés en tant qu'entrée au générateur d'identifiant de transaction (203) pour générer l'identifiant de transaction.

19. Le système de la revendication 12, dans lequel le résolveur DNS (200) est conçu pour coder le nom de domaine en mettant en majuscules un ou plusieurs caractères du nom de domaine et pour communiquer le nom de domaine codé en tant qu'entrée du nom de domaine au générateur d'identifiant de transaction.

20. Le système de la revendication 12, dans lequel le résolveur DNS (200) est conçu pour coder le nom de domaine en utilisant un élément parmi un punycode ou un schéma de codage RACE.

21. Le système de la revendication 12, dans lequel le résolveur DNS (200) est conçu pour déterminer que la destination ne réécrit pas de réponses et en réponse à la détermination pour coder une portion de l'interrogation DNS et pour communiquer la portion codée en tant qu'entrée au générateur d'identifiant de transaction (203) pour générer l'identifiant de transaction.
